# EUROPÄISCHE PATENTSCHRIFT

(11) **EP 2 887 420 B1**
(45) Veröffentlichungstag und Bekanntmachung des Hinweises auf die Patenterteilung: **12.07.2017**
(21) Anmeldenummer: 14195754.8
(22) Anmeldetag: 02.12.2014
(51) Int. Cl.: H01M 2/02, B60L 11/18, B66F 9/075

(54) **TRAKTIONSBATTERIE FÜR MOBILE ARBEITSMASCHINE**
TRACTION BATTERY FOR MOBILE WORK MACHINE
BATTERIE DE PROPULSION POUR MACHINE-OUTIL MOBILE

(30) Priorität: 19.12.2013 DE 102013114536
(43) Veröffentlichungstag der Anmeldung: 24.06.2015
(73) Patentinhaber: Linde Material Handling GmbH, 63743 Aschaffenburg (DE)
(72) Erfinder: Groh, Jonas, 63743 Aschaffenburg (DE); Georges, Anjo, 63741 Aschaffenburg (DE); Matzander, Eberhard, 63743 Aschaffenburg (DE); Meidhof, Wolfgang, 63768 Hösbach (DE)
(74) Vertreter: Patentship Patentanwaltsgesellschaft mbH

(56) Entgegenhaltungen:
- WO-A2-2006/045016
- DE-A1-102011 018 531
- US-A1- 2011 264 316

## Beschreibung

Die Erfindung betrifft eine Traktionsbatterie für eine mobile Arbeitsmaschine. Insbesondere betrifft die Erfindung eine Traktionsbatterie für eine batterie-elektrisch angetriebene mobile Arbeitsmaschine, etwa einen Gegengewichtsgabelstapler, die als Hochleistungsbatterie ausgebildet ist und einen Batterietrog aufweist, innerhalb dessen sich alle Bauteile der Hochleistungsbatterie befinden, sowie ein System aus einem Gegengewichtsgabelstapler und einer Traktionsbatterie.

Für den Betrieb von batterie-elektrisch angetriebenen mobilen Arbeitsmaschinen, insbesondere Flurförderzeugen, wie etwa beispielsweise Gabelstaplern, kommen Traktionsbatterien zum Einsatz, die im Regelfall als austauschbare Batterien in ein Batteriefach eingesetzt werden können und, sobald Sie entladen sind, gegen eine aufgeladene Traktionsbatterie ersetzt werden können. Bisher sind solche Traktionsbatterien im Regelfall Bleibatterien, bei denen eine chemische Reaktion zwischen Schwefelsäure und Blei zur Speicherung der elektrischen Energie dient. Die einzelnen Bleizellen einer solchen Traktionsbatterie sind dabei in einem Behälter bzw. Batterietrog eingesetzt, der mit entsprechenden Transportmitteln, wie etwa einem weiteren Gabelstapler oder Flurförderzeug transportiert und gehandhabt werden kann. Aufgrund des in der Traktionsbatterie enthaltenen Bleis weist diese ein erhebliches Gewicht auf.

Gegengewichtsgabelstapler, die sowohl mit Antrieb durch Verbrennungsmotor, aber auch in großer Zahl als batterie-elektrisch betriebene Fahrzeuge mit einer Traktionsbatterie zum Einsatz kommen, weisen an der Vorderachse ein Hubgerüst mit Lastaufnahmemitteln auf, insbesondere einer Lastgabel. Dabei liegt der Schwerpunkt einer angehobenen Last vor der Vorderachse und das dadurch entstehende Lastmoment, das den Gegengewichtsgabelstapler nach vorne um die Vorderachse dreht und ein Kippmoment nach vorne erzeugt, wird durch ein Gegengewicht über bzw. hinter der Hinterachse ausgeglichen. Bei der Bestimmung des erforderlichen Gegenmoments, um ein Lastmoment einer höchstzulässigen Last des Gegengewichtsgabelstaplers auszugleichen, wird dabei bei batterie-elektrisch betriebenen Gabelstaplern auch das Moment der Traktionsbatterie mit ihrem hohen Gewicht berücksichtigt.

Durch neuere Technologien können inzwischen Batterien bzw. Akkumulatoren hergestellt werden und auch im industriellen Einsatz verwendet werden, die bessere Leistungsdaten bieten. Solche Batterien kann man als Hochleistungsbatterien bezeichnen, die sich dadurch auszeichnen dass sie gegenüber einem Blei-Säureakkumulator eine höhere Energiedichte in Bezug auf Gewicht und/oder Volumen aufweisen und eine andere Technik als eine Blei-Säure Reaktion für die Energiespeicherung nutzen. Hinzu kommt bei vielen Hochleistungsbatterien als Merkmal, dass eine hohe Leistung beim Entladen abgegeben werden kann und/oder mit großer Leistung geladen werden kann. Die typischen Energiedichten in Bezug auf Gewicht und/oder Volumen liegen bei einer Hochleistungsbatterie dabei mindestens für einen der beiden Werte oberhalb und außerhalb der entsprechenden Kenngrößen für Blei-Säurebatterien.

Bereits Nickel-Cadmium Batterien weisen zwar keinen erheblichen Gewichtsvorteil auf, haben jedoch eine bis zum dreifachen höhere Energiedichte in Bezug auf das Volumen. Weitere bekannte Technologien für Akkumulatoren bzw. wieder aufladbare Batterien unter Einsatz von Nickel sind beispielsweise Nickel-Metallhydrid, Nickel-Eisen, Nickel-Wasserstoff, Nickel-Zink und Silber-Zink. Daneben sind auch Natrium-Nickelchlorid und Natrium-Schwefel Akkumulatoren bekannt.

Zunehmend in größerem Umfang eingesetzt werden jedoch Lithium-Ionenbatterien, die eine in Serie anwendbare Zuverlässigkeit erreicht haben, sich durch hohe Energiedichte auszeichnen und nur einem geringen Memoryeffekt unterliegen sowie ein Entladen der Batterie bzw. Aufladen der Batterie mit großer Leistung ermöglichen. Bei der Lithium-Ionenbatterie sind ebenfalls unterschiedliche Technologien bekannt, wie beispielsweise Lithium-Polymer, Lithium-Cobaltdioxid, Lithium-Luft, Lithium-Titanat, Lithium-Eisenphosphat, Lithium-Mangan und Zinn-Schwefel-Lithiumionen.

Besonders vorteilhaft ist der Einsatz solcher Hochleistungsbatterien bei Fahrzeugen und beispielsweise Flurförderzeugen, da aufgrund der hohen Energiedichte in Bezug auf das Volumen bei dem vorgegebenen Bauraum für die Batterie eine größere Menge elektrische Energie gespeichert werden kann und somit die Reichweite eines Fahrzeugs bzw. die Einsatzdauer des Flurförderzeugs vergrößert werden kann.

Bei batterie-elektrisch betriebenen Gegengewichtgabelstaplern, bei denen insbesondere Lithium-Ionenbatterie als Hochleistungsbatterien zum Einsatz kommen sollen, ergibt sich jedoch der Nachteil, dass durch das geringere Gewicht der Traktionsbatterie kein ausreichendes Gegenmoment zu dem Lastgewicht mehr gewährleistet ist. Wenn beispielsweise eine bestehende Bleibatterie durch eine Lithium-Ionenbatterie ersetzt wird, kann ein erheblicher Gewichtsunterschied entstehen, wenn eine Blei-Säurebatterie eine übliche Dichte von 2700 kg/m³ aufweist, eine Lithium-Ionenbatterie jedoch nur von ca. 2100 kg/m³. Der Gegengewichtgabelstapler müsste dann mit einem entsprechend größeren Gegengewicht versehen werden. Dies ist jedoch dann nicht möglich, oder mit Nachteilen verbunden, wenn ein Wechselbetrieb sowohl mit Blei-Säurebatterien wie auch mit Lithium-Ionenbatterien erfolgen soll.

Aus der DE 10 2011 018 531 A ist eine Traktionsbatterie in einem Batterietrog mit Lithium-Ionentechnik und verschiedene Spannungen sowie Kapazitäten bekannt.

Aus der WO 2006/045016 A2 ist eine Lithium-Ionenbatterie bekannt, die die äußeren geometrischen Abmessungen einer entsprechenden Blei-Säurebatterie einhält.

Aus der US 2011/264316 A1 ist ein Verfahren bekannt, bei dem abhängig vom Gewicht einer eingesetzten Traktionsbatterie, die Belastungs- und Arbeitsgrenzen des Flurförderzeugs begrenzt werden.

Der vorliegenden Erfindung liegt daher die Aufgabe zugrunde, eine Traktionsbatterie als Hochleistungsbatterie zur Verfügung zu stellen, die die zuvor genannten Nachteile vermeidet, kostengünstig herzustellen ist und einen Wechselbetrieb mit Blei-Säurebatterien ermöglicht.

Diese Aufgabe wird durch eine Traktionsbatterie für eine batterie-elektrisch angetriebene mobile Arbeitsmaschine mit den Merkmalen des unabhängigen Patentanspruchs 1 sowie ein System mit den Merkmalen des Patentanspruchs 13 gelöst. Vorteilhafte Weiterbildungen der Erfindung sind in den Unteransprüchen angegeben.

Die Aufgabe wird erfindungsgemäß dadurch gelöst, dass bei einer Traktionsbatterie für eine batterie-elektrisch angetriebene mobile Arbeitsmaschine, insbesondere einen Gegengewichtsgabelstapler, die als Hochleistungsbatterie ausgebildet ist und einen Batterietrog aufweist, innerhalb dessen sich alle Bauteile der Hochleistungsbatterie befinden, mindestens eine Wandfläche des Batterietrogs eine so große Wandstärke aus schwerem Material aufweist und dadurch ein zusätzliches Gewicht bildet, dass die Traktionsbatterie im Wesentlichen dasselbe Gesamtgewicht aufweist wie eine Blei-Säuretraktionsbatterie gleicher äußerer Abmessungen.

Vorteilhaft entsteht so eine Hochleistungsbatterie, die anstatt einer herkömmlichen Blei-Säurebatterie in ein Batterieaufnahmefach eines Gegengewichtsgabelstaplers bzw. allgemein einer mobilen Arbeitsmaschine eingesetzt werden kann und die dieselbe Gewichts- und Lastverteilung ergibt. Es ist nicht erforderlich, um das für die zulässige Höchstlast eines Gabelstaplers erforderliche Gegenmoment zu erreichen, das Gegengewicht entsprechend verstärkt auszuführen. Dadurch kann kostensparend der Gegengewichtsgabelstapler weitgehend unverändert bleiben. Auch bei sonstigen mobilen Arbeitsmaschinen müssen keine Veränderungen der Gewichtsverteilung und Statik berücksichtigt werden. Der häufig bereits als Stahltrog ausgeführte Batterietrog kann hierfür an einer der Wandflächen oder auch mehreren Wandflächen mit einer verstärkten Wandstärke ausgeführt werden, die für die sonstigen Funktionen des Batterietrogs, wie Herstellen der statischen Stabilität, der Möglichkeit des Anhebens der Batterie durch Lasthebemittel sowie des dichten Abschlusses im Falle des Auslaufens von Flüssigkeiten aus den Batteriezellen, nicht erforderlich wäre. Dabei sind bei einer Hochleistungsbatterie im Regelfall neben den eigentlichen Batteriezellen noch elektronische Steuervorrichtungen und Überwachungseinrichtungen in dem Batterietrog angeordnet, die zusammengefasst auch als Batteriemanagementsystem bezeichnet werden.

Vorteilhaft ist die Wandfläche eine Seitenwand.

Da die Batterietröge der Traktionsbatterie bestimmte übliche Größen bzw. Normgrößen aufweisen und umgekehrt auch die einzelnen Batteriezellen der Hochleistungsbatterie typische Abmessungen haben, wobei diese zueinander sich so verhalten, dass bei einer dichten Anordnung innerhalb des Batterietrogs noch Freiräume verbleiben, die nicht mit einer weiteren Batteriezelle aufgefüllt werden können, kann vorteilhaft an einer Seitenwand bzw. mehreren Seitenwänden eine zusätzliche Materialstärke vorgesehen werden, ohne die Außenabmessungen zu vergrößern.

In einer günstigen Ausführungsform hat die Wandfläche maximal eine Wandstärke, die der Breite einer an der Oberseite des Batterietrogs vorgesehenen Flanschfläche entspricht.

Es kann an der Oberseite des Batterietrog eine Flanschfläche vorgesehen sein, beispielsweise zur Verschraubung und Abdichtung gegenüber einer Abdeckung des Batterietrogs. Diese lässt sich für eine entsprechende Wandfläche vorteilhaft einfach verwirklichen, wenn die Materialstärke angepasst an die Flanschfläche ausgeführt ist.

Die Wandflächen zweier gegenüberliegender Seitenwände des Batterietrogs können eine große Wandstärke aufweisen.

Dies können insbesondere die Wandflächen sein, die bei einer in einem Batterieaufnahmefach eingesetzten Traktionsbatterie zu den beiden Seiten des Gegengewichtsgabelstaplers bzw. der mobilen Arbeitsmaschine orientiert sind. Dadurch ergibt sich bei einer Ausführung beispielsweise des Batterietrogs aus Stahl eine zusätzliche Schutzwirkung gegenüber mechanischen Beschädigungen beispielsweise dem seitlichen Eindringen eines anderen Fahrzeugs im Falle eines Aufpralls. Daneben und unabhängig hiervon hat eine solche Ausführung mit zwei Wandflächen an gegenüberliegenden Seitenflächen des Batterietrogs den Vorteil, dass sich eine symmetrische Verteilung des zusätzlichen Gewichtes ergibt.

Die Wandfläche kann eine Bodenfläche sein.

Das Material der Wandfläche kann homogenes Metall sein, insbesondere Stahl.

Dies lässt sich besonders einfach umsetzen, beispielsweise, indem für eine Wandfläche eines als Schweißkonstruktion ausgeführten Batterietrogs eine dickere Blechstärke verwendet wird.

Vorteilhaft ist die Wandfläche aus kombinierten Materialien aufgebaut, insbesondere schwere Materialien, die in der Wandfläche aus leichterem Material eingeschlossen sind.

Beispielsweise kann die Wandfläche doppelwandig ausgeführt und der Hohlraum mit einem schwereren Material ausgefüllt sein.

Die Wandfläche kann aus einem Hohlprofil bestehen, das mit einem schweren Material, insbesondere mit Blei, gefüllt ist.

In einer günstigen Ausgestaltung der Traktionsbatterie besteht die Wandfläche aus Kunststoff, in dem Metallelemente, insbesondere aus Blei, eingeschlossen sind.

Vorteilhaft wird durch die Wandfläche oder mehrere Wandflächen der Schwerpunkt der Traktionsbatterie festgelegt.

Bei einer herkömmlichen Blei-Säurebatterie befindet sich der Schwerpunkt regelmäßig in Schnittpunkt der Raumdiagonalen des Quaders, da die Massenverteilung relativ homogen ist. Bei einer Hochleistungsbatterie, die neben Batteriezellen auch noch Steuerungsvorrichtungen und Überwachungseinrichtungen als Batteriemanagementsystem umfasst und bei der die Abmessungen der Batteriezellen im Verhältnis zu den vorgegebenen bzw. genormten Maßen der Batterietröge nicht zu einer homogenen Auffüllung führen, ergibt sich eine Verschiebung des Schwerpunkts. Diese kann gezielt korrigiert oder beeinflusst werden durch die Wandflächen. Insbesondere kann durch eine Verlegung des Schwerpunkts außerhalb des Schnittpunkts der Raumdiagonalen des Quaders auch die Gewichts- und Stabilitätsverteilung des Flurförderzeugs positiv beeinflusst werden.

In einer weiteren Gestaltung wird der Schwerpunkt über dem Schnittpunkt der Diagonalen der Bodenfläche festgelegt.

Dies entspricht in Bezug auf die Wirkung der Traktionsbatterie als Gegenmoment zu dem Lastmoment der Schwerpunktlage einer gleich schweren Blei-Säurebatterie, bei der sich der Schwerpunkt im Schnittpunkt der Raumdiagonalen des Quaders und somit über dem Schnittpunkt der Diagonalen der Bodenfläche befindet.

Vorteilhaft ist die Hochleistungsbatterie eine Lithium-Ionenbatterie.

Lithium-Ionenbatterien stellen die unter Kostengesichtspunkten sowie Lieferbarkeit am besten zur Verfügung stehenden Hochleistungsbatterien dar, die in Bezug auf die Energiedichte über dem Volumen wie auch dem Gewicht die optimale Leistung erbringen. Es ist daher besonders vorteilhaft, eine Lithium-Ionenbatterie in Bezug auf Abmessungen und Gewicht austauschbar mit einer Blei-Säurebatterie als Traktionsbatterie zu gestalten.

Die Aufgabe wird auch gelöst durch ein System aus mindestens einem Gegengewichtsgabelstapler, mindestens einer Blei-Säuretraktionsbatterie und mindestens einer Traktionsbatterie, wie sie zuvor beschrieben wurde.

Dies ermöglicht einen Austauschbetrieb der Traktionsbatterie, bei dem frei zwischen einer Hochleistungsbatterie und einer herkömmlichen Blei-Säuretraktionsbatterie gewechselt werden kann.

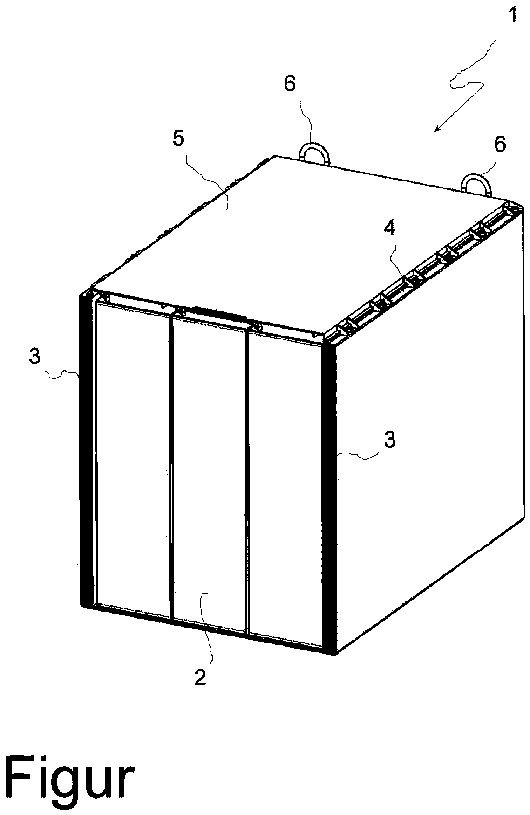

Weitere Vorteile und Einzelheiten der Erfindung werden anhand des in der schematischen Figur dargestellten Ausführungsbeispiels näher erläutert. Hierbei zeigt die Figur eine erfindungsgemäße Traktionsbatterie 1 in Perspektivenansicht. Ein Batterietrog 2 umschließt die hier nicht näher dargestellten Komponenten der Hochleistungsbatterie und weist an gegenüberliegenden Seiten angeordnete Wandflächen 3 mit einer vergrößerten Wandstärke auf. Dabei entspricht die Wandstärke der Breite eines Flansches 4, auf den auf der Oberseite des Batterietrogs 2 eine Abdeckung 5 befestigt ist. Über nur an einer Seite dargestellten Hebeösen 6 kann der Batterietrog 2 mit geeignetem Hebezeug angehoben werden.

Der Batterietrog 2 mit den weiteren Komponenten der Hochleistungsbatterie weist dasselbe Gesamtgewicht wie eine Blei-Säurebatterie mit gleichen äußeren geometrischen Abmessungen auf, da die beiden Wandflächen 3 mit der größeren Materialstärke, im vorliegenden Beispielsfall Stahlbleche, das fehlende Gewicht der Hochleistungsbatterie ausgleichen. Im vorliegenden Beispielsfall kann die Hochleistungsbatterie etwa eine Lithium-Ionenbatterie sein, deren Komponenten einschließlich Batteriemanagementsystem im Inneren des Batterietrogs 2 angeordnet sind.

## Patentansprüche

1. Traktionsbatterie für eine batterie-elektrisch angetriebene mobile Arbeitsmaschine, insbesondere einen Gegengewichtsgabelstapler, die als Hochleistungsbatterie ausgebildet ist und einen Batterietrog (2) aufweist, innerhalb dessen sich alle Bauteile der Hochleistungsbatterie befinden,
**dadurch gekennzeichnet,**
**dass** mindestens eine Wandfläche (3) des Batterietrogs (2) eine so große Wandstärke aus schwerem Material aufweist und dadurch ein zusätzliches Gewicht bildet, dass die Traktionsbatterie im Wesentlichen dasselbe Gesamtgewicht aufweist wie eine Blei-Säuretraktionsbatterie gleicher äußerer Abmessungen.

2. Traktionsbatterie nach Anspruch 1,
**dadurch gekennzeichnet,**
**dass** die Wandfläche (3) eine Seitenwand ist.

3. Traktionsbatterie nach Anspruch 2,
**dadurch gekennzeichnet,**
**dass** die Wandfläche (3) maximal eine Wandstärke hat, die der Breite einer an der Oberseite des Batterietrogs vorgesehenen Flanschfläche (4) entspricht.

4. Traktionsbatterie nach Anspruch 2 oder 3,
**dadurch gekennzeichnet,**
**dass** die Wandflächen (3) zweier gegenüberliegender Seitenwände des Batterietrogs (2) eine große Wandstärke aufweisen.

5. Traktionsbatterie nach einem der Ansprüche 1 bis 4,
**dadurch gekennzeichnet,**
**dass** die Wandfläche eine Bodenfläche ist.

6. Traktionsbatterie nach einem der Ansprüche 1 bis 5,
**dadurch gekennzeichnet,**
**dass** das Material der Wandfläche (3) homogenes Metall ist, insbesondere Stahl.

7. Traktionsbatterie nach einem der Ansprüche 1 bis 5,
**dadurch gekennzeichnet,**
**dass** die Wandfläche (3) aus kombinierten Materialien aufgebaut ist, insbesondere schwere Materialien, die in der Wandfläche aus leichterem Material eingeschlossen sind.

8. Traktionsbatterie nach Anspruch 7,
**dadurch gekennzeichnet,**
**dass** die Wandfläche (3) aus einem Hohlprofil besteht, das mit einem schweren Material, insbesondere mit Blei, gefüllt ist.

9. Traktionsbatterie nach Anspruch 8,
**dadurch gekennzeichnet,**
**dass** die Wandfläche (3) aus Kunststoff besteht, in dem Metallelemente, insbesondere aus Blei, eingeschlossen sind.

10. Traktionsbatterie nach einem der Ansprüche 1 bis 9,
**dadurch gekennzeichnet,**
**dass** durch die Wandfläche (3) oder mehrere Wandflächen der Schwerpunkt der Traktionsbatterie (1) festgelegt wird.

11. Traktionsbatterie nach Anspruch 10,
**dadurch gekennzeichnet,**
**dass** der Schwerpunkt über dem Schnittpunkt der Diagonalen der Bodenfläche festgelegt wird.

12. Traktionsbatterie nach einem der Ansprüche 1 bis 11,
**dadurch gekennzeichnet,**
**dass** die Hochleistungsbatterie eine Lithium-Ionenbatterie ist.

13. System aus mindestens einem Gegengewichtsgabelstapler, mindestens einer Blei-Säuretraktionsbatterie und mindestens einer Traktionsbatterie (1) nach einem der Ansprüche 1 bis 12.

## Claims

1. Traction battery for a battery-electric powered mobile working machine, in particular a counterbalance forklift truck, which traction battery is configured as a high-power battery and has a battery tray (2) which contains all of the components of the high-powered battery,
**characterized**
**in that** at least one wall surface (3) of the battery tray (2) has such a large wall thickness composed of heavy material, and as a result forms an additional weight, that the traction battery has substantially the same total weight as a lead-acid traction battery with the same external dimensions.

2. Traction battery according to Claim 1,
**characterized**
**in that** the wall surface (3) is a side wall.

3. Traction battery according to Claim 2,
**characterized**
**in that** the wall surface (3) has, at most, a wall thickness which corresponds to the width of a flange surface (4) which is provided on the top side of the battery tray.

4. Traction battery according to Claim 2 or 3,
**characterized**
**in that** the wall surfaces (3) of two opposite side walls of the battery tray (2) have a large wall thickness.

5. Traction battery according to one of Claims 1 to 4,
**characterized**
**in that** the wall surface is a floor surface.

6. Traction battery according to one of Claims 1 to 5,
**characterized**
**in that** the material of the wall surface (3) is homogeneous metal, in particular steel.

7. Traction battery according to one of Claims 1 to 5,
**characterized**
**in that** the wall surface (3) is constructed from combined materials, in particular heavy materials which are incorporated into the wall surface which is composed of a more lightweight material.

8. Traction battery according to Claim 7,
**characterized**
**in that** the wall surface (3) consists of a hollow profile which is filled with a heavy material, in particular with lead.

9. Traction battery according to Claim 8,
**characterized**
**in that** the wall surface (3) is composed of plastic in which metal elements, in particular which are composed of lead, are incorporated.

10. Traction battery according to one of Claims 1 to 9,
**characterized**
**in that** the centre of gravity of the traction battery (1) is defined by the wall surface (3) or a plurality of wall surfaces.

11. Traction battery according to Claim 10,
**characterized**
**in that** the centre of gravity is defined by means of the intersection point of the diagonals of the base surface.

12. Traction battery according to one of Claims 1 to 11,
**characterized**
**in that** the high-power battery is a lithium-ion battery.

13. System comprising at least one counterbalance forklift truck, at least one lead-acid traction battery and at least one traction battery (1) according to one of Claims 1 to 12.

## Revendications

1. Batterie de traction pour engin mobile entraîné par batterie électrique, en particulier élévateur à fourche et contrepoids, configurée comme batterie à haute puissance et présentant un logement (2) de batterie dans le quel sont placés tous les composants de la batterie à haute puissance,
**caractérisée en ce que**
au moins une surface (3) de paroi du logement (2) de batterie présente une épaisseur de matériau lourd telle qu'elle forme un poids supplémentaire et
**en ce que** la batterie de traction présente essentiellement le même poids total qu'une batterie de traction à l'acide et au plomb de mêmes dimensions extérieures.

2. Batterie de traction selon la revendication 1, **caractérisée en ce que** la surface (3) de paroi est une paroi latérale.

3. Batterie de traction selon la revendication 2, **caractérisée en ce que** la surface (3) de paroi présente au maximum une épaisseur qui correspond à la largeur d'une surface de bride (4) prévue sur le côté supérieur de la cuve à batterie.

4. Batterie de traction selon les revendications 2 ou 3, **caractérisée en ce que** les surfaces (3) de paroi de deux parois latérales opposées de la cuvette (2) à batterie présentent une grande épaisseur.

5. Batterie de traction selon l'une des revendications 1 à 4, **caractérisée en ce que** la surface de paroi est une surface de fond.

6. Batterie de traction selon l'une des revendications 1 à 5, **caractérisée en ce que** le matériau de la surface (3) de paroi est un métal homogène et en particulier l'acier.

7. Batterie de traction selon l'une des revendications 1 à 5, **caractérisée en ce que** la surface (3) de paroi est constituée de matériaux combinés, en particulier de matériaux lourds incorporés dans une surface de paroi en matériau léger.

8. Batterie de traction selon la revendication 7, **caractérisée en ce que** la surface (3) de paroi est constituée d'un profilé creux rempli d'un matériau lourd et en particulier de plomb.

9. Batterie de traction selon la revendication 8, **caractérisée en ce que** la surface (3) de paroi est constituée de matière synthétique dans laquelle sont incorporés des éléments métalliques, en particulier en plomb.

10. Batterie de traction selon l'une des revendications 1 à 9, **caractérisée en ce que** le centre de gravité de la batterie de traction (1) est défini par la surface (3) de paroi ou par plusieurs surfaces de paroi.

11. Batterie de traction selon la revendication 10, **caractérisée en ce que** le centre de gravité est défini par le point de concours des diagonales de la surface de fond.

12. Batterie de traction selon l'une des revendications 1 à 11, **caractérisée en ce que** la batterie à haute puissance est une batterie à ions lithium.

13. Système constitué d'au moins un élévateur à contrepoids, d'au moins une batterie de traction à l'acide et au plomb et d'au moins une batterie de traction (1) selon l'une des revendications 1 à 12.
